# EUROPÄISCHE PATENTSCHRIFT

(11) **EP 0 675 088 B1**
(45) Veröffentlichungstag und Bekanntmachung des Hinweises auf die Patenterteilung: **03.11.1999**
(21) Anmeldenummer: 95104256.3
(22) Anmeldetag: 23.03.1995
(51) Int. Cl.: C04B 7/21, C04B 7/32, C04B 28/14, C04B 7/153, C04B 11/28, C04B 28/06

(54) **Bindemittel für hydraulisch abbindende Fliessestriche**
Binder for hydraulically setting flowing plasters
Liant pour plâtres fluides à prise hydraulique

(30) Priorität: 29.03.1994 DE 4410850
(43) Veröffentlichungstag der Anmeldung: 04.10.1995
(73) Patentinhaber: SICOWA Verfahrenstechnik für Baustoffe GmbH & Co. KG, D-52072 Aachen (DE); ProMineral Gesellschaft zur Verwendung von Mineralstoffen mbH, 50129 Bergheim (DE)
(72) Erfinder: Ludwig, Udo, Prof. Dr., D-52073 Aachen (DE); Koslowski, Thomas, Dr., D-52072 Aachen (DE); Kanig, Martin, Dr., D-52072 Aachen (DE)

(56) Entgegenhaltungen:
- EP-A- 0 188 618
- EP-A- 0 213 390
- EP-A- 0 271 329
- EP-A- 0 347 655
- DE-A- 2 953 652
- GB-A- 2 042 496
- GB-A- 2 077 251
- JP-A- 54 099 126
- JP-A- 54 157 128

## Beschreibung

Die Erfindung betrifft ein Bindemittel für hydraulisch abbindende Fließestriche aus einer Mischung aus Calciumsulfat und Hüttensand.

Aus der DE-PS 38 43 625 ist es bekannt, für Fließestriche ein Bindemittel aus Calciumsulfat-Alphahalbhydrat und mehlartigem Hüttensand im Verhältnis 90:10 bis 30:70 gegebenenfalls mit Zuschlägen und Zusatzstoffen zu verwenden. Hierbei beeinflußt das Calciumsulfat-Alphahalbhydrat die Frühfestigkeit günstig. Derartige Fließestriche besitzen im allgemeinen infolge des hohen Gipsanteils ein genügend geringes Schwindverhalten beim Austrocknen und Endabbinden und eine ausreichende Oberflächenfestigkeit, wobei letztere zu steigenden Hüttensandgehalten hin schlechter wird, weshalb dessen Gehalt auf den vorgegebenen Bereich beschränkt ist. Dies führt somit zu einem sehr hohen Einsatz von Calciumsulfat-Alphahalbhydrat, das ein relativ aufwendig herzustellendes und damit teures Produkt darstellt.

Ein Estrich auf der Basis von Hüttensand wäre aufgrund seiner langen Reaktionszeit äußerst austrocknungsempfindlich und liefe Gefahr zu verdursten. Ein Nachwässern würde dem entgegenwirken, ist aber umständlich und somit unerwünscht. Außerdem treten Festigkeits- und Oberflächenprobleme auf, die durch mangelnden Umsatz von Hüttensand hervorgerufen werden. Auch Beimengungen von bis zu 30 Gew.-% Calciumsulfathalbhydrat, durch das zwar die Frühfestigkeit günstiger gestaltet wird, setzen die Empfindlichkeit gegenüber Austrocknen nur herab, beseitigen diese und die Oberflächenprobleme durch Frühcarbonatisierung aber nicht.

Vom Sulfathüttenzement gemäß DIN 4210 (1954), der bereits seit langem nicht mehr erhältlich ist und neben Hüttensand und Calciumsulfat bis zu etwa 2,5 Gew.-% Portlandzementklinker enthielt, ist bekannt, daß das Problem der mangelnden Oberflächenfestigkeit nicht besteht, jedoch wird hierbei durch den Portlandzementklinker das Schwindverhalten negativ beeinflußt, so daß Risse entstehen, die man im Beton akzeptiert hat, jedoch bei einem Estrich nicht tolerierbar sind.

Ein Estrich auf Calciumsulfatbasis und Portlandzement oder -klinker ist schwindarm und neigt mit steigendem Portlandzementgehalt zum Treiben, wenn der Estrich naß wird. So ist ein entsprechender Estrich gegenüber wässrigen Vorstrichen bzw. Grundierungen, wie sie heutzutage anstelle von solchen die organische Flüssigkeiten als Lösungsmittel enthalten, verwendet werden, empfindlich. Um diesem Problem zu begegnen, wird gerade nach der oben aufgeführten DE-PS 38 43 625 statt des Portlandzements bzw. dessen Klinker Hüttensand eingesetzt, um den Estrich wasserfest und unempfindlich gegenüber Treiben zu machen.

Aufgabe der Erfindung ist es ein Bindemittel der eingangs genannten Art zu schaffen, das die Herstellung von hydraulisch abbindenden Fließestrichen ermöglicht, die bei vermindertem Calciumsulfatanteil eine ausreichende Oberflächenfestigkeit aufweisen.

Diese Aufgabe wird dadurch gelöst, daß neben Calciumsulfat und Hüttensand durch Tonerdezement und/oder durch Tonerdeschmelzzement eingebrachte reaktive Aluminate, berechnet als CA, die gegebenenfalls teilweise durch Kalkhydrat ersetzt sein können, enthalten sind, wobei die Mischung im Dreistoffdiagramm Calciumsulfat/Hüttensand/reaktive Aluminate in einem Fenster, das auf der Calciumsulfat-Hüttensand-Achse von 35 bis 70 Gew.-% Calciumsulfat, gerechnet als CaSO₄, und in Richtung reaktiver Aluminate etwa von 0,5 bis 5 Gew.-% reicht, derart abgestimmt ist, daß sich für ein Normmörtelprisma aus einer Mischung aus drei Gew.-Teilen Quarzsand und einem Gew.-Teil Bindemittel im Prüfalter von 28 Tagen, davon 21 Tage Lagerung bei 20°C und 65% relativer Luftfeuchtigkeit nach vorhergehender Feucht- bzw. Wasserlagerung ein Schwinden kleiner 0,3 mm/m, insbesondere kleiner 0,2 mm/m ergibt.

Hiermit können wasserfeste Fliesßestriche, die sich insbesondere auch für Industrieböden eignen, hergestellt werden die eine hohe Frühfestigkeit, ausreichende Oberflächenfestigkeit bei hoher Enddruckfestigkeit und ein so geringes Schwindvermögen beim Austrocknen und Endabbinden zeigen, daß kein Reißen oder Aufschüsseln erfolgt.

Die Normmörtelprismen werden in Anlehnung an die für Zement geltende europäische Norm EN 196 Teil 1 mit einem Verhältnis von Wasser zu Bindemittel von etwa 0,46 hergestellt. Das Messen des Schwindens wird an den Normmörtelprismen entsprechend den Vorgaben aus EN 196 im Alter von 28 Tagen bei anfänglicher zweitägiger Feuchtlagerung und anschliessender fünftägiger Wasserlagerung vorgenommen.

Zweckmäßigerweise wird die Rezeptur außerdem in dem Fenster des Dreistoffdiagramms derart abgestimmt, daß sich ein Quellen bei 26-tägiger Wasserlagerung (bei vorheriger zweitägiger Feuchtlagerung) von höchstens 1 mm/m, insbesondere 0,5 mm/m ergibt.

Die reaktiven Aluminate können insbesondere in Form von C₁₂A₇ und/oder C₃A vorliegen, die CaO im überschuß aufweisen und damit bei der Reaktion im Frischmörtel einerseits Kalkhydrat abspalten und andererseits durch Ausbildung aluminatischer Hydratationsprodukte die Oberflächenfestigkeit heraufsetzen. Das abgespaltene Ca(OH)₂ dient als Puffer gegen eine Frühcarbonatisierung des Frischmörtels an der Estrichoberfläche.

Die reaktiven Aluminate können aber auch in Form von CA oder C₄AF vorliegen, wobei außerdem ein Teil der reaktiven Aluminate durch Kalkhydrat ersetzt sein kann.

Der Anteil der reaktiven Aluminate liegt vorzugsweise unter 2,5 Gew.-%.

Die reaktiven Aluminate, gegebenenfalls zusammen mit reaktiven Silikaten wie C₂S und C₃S, werden etwa in Form von Tonerde- oder Tonerdeschmelzzement eingebracht.

Die einzelnen Komponenten werden getrennt vermahlen und anschließend vermischt. Hierbei strebt man für die einzelnen Komponenten vorzugsweise eine spezifische Oberfläche nach Blaine von mindestens 3000 cm²/g an.

Als Calciumsulfat, das praktisch nur die Frühfestigkeit positiv beeinflußt, kommen CaSO₄.xH₂O allgemein sowie Mischungen verschiedener Calciumsulfate infrage, d.h. daß beispielsweise Calciumsulfat-Betahalbhydrat, aber auch, und zwar insbesondere Hartgips mit einem Wasseranspruch < 0,4 wie Calciumsulfat-Alphahalbhydrat oder Anhydrit-II oder Anhydrit-III, gegebenenfalls in Mischung, verwendet werden können, wobei die Verwendung von Calciumsulfat-Alphahalbhydrat besonders bevorzugt ist. Das Calciumsulfat kann feingemahlen oder pulverförmig eingesetzt werden. Insbesondere für die Verwendung in Fahrmischern kann auch feuchter REA-Gips (Rauchgasentschwefelungsgips) verwendet werden, der dann bei der Frischmörtelherstellung unterzumischen ist. Das gleiche gilt für Rückgut aus Fahrmischern, das vom Zuschlag befreit worden ist.

Als Zuschläge kommen beispielsweise Quarzsande, Kiese, Splitte oder sonstige quarzitische Materialien infrage. Ferner können Zusatzstoffe wie Steinmehle und Flugasche zugegeben werden.

Zusätzlich können Anreger, insbesondere für den Hüttensand, z.B. Chlorid, Verzögerer, Beschleuniger, Stabilisatoren und Fließmittel zugegeben werden.

Nachstehend werden mehrere Bindemittelzusammensetzungen sowie die Schwind- und Quellwerte von daraus hergestellten Normmörtelprismen im Alter von 28 Tagen angegeben.

| Calciumsulfat-Alphahalbhydrat Gew.-% | Hüttensand Gew.-% | reaktives Aluminat enthaltender Anteil Gew.-% | Kalkhydrat Gew.-% | Sonst. Gew.-% | Wasser/Bindemittel | Schwinden mm/m | Quellen mm/m |
|---|---|---|---|---|---|---|---|
| 50 | 42,7 | 6,8* | | 0,5 | 0,47 | 0,128 | 0,859 |
| 50 | 46,4 | 3,4* | | 0,25 | 0,47 | 0,133 | 0,288 |
| 41,7 | 38,6 | 2,9 | | 16,9** | 0,46 | 0,16 | 0,288 |
| 35 | 63 | 2*** | | | 0,45 | 0,096 | 0,263 |
| 34,6 | 62,4 | 3**** | | | 0,46 | 0,032 | 0,175 |

| | | | | | | | |
|---|---|---|---|---|---|---|---|
| * Portlandzementklinker | | | | | | | |
| ** 16,7 Gew.-% Steinkohlenflugasche + 0,2 Gew.-% Sonstiges | | | | | | | |
| *** Tonerdezement | | | | | | | |
| **** 2 Gew.-% Tonerdezement + 1 Gew.-% Kalkhydrat | | | | | | | |

## Patentansprüche

1. Bindemittels für hydraulisch abbindende Fließestriche aus einer Mischung aus Calciumsulfat, Hüttensand und reaktiven Aluminaten, eingebracht durch Tonerdezement und/oder Tonerdeschmelzzement entsprechend einem Fenster im Dreistoffdiagramm Calciumsulfat/Hüttensand/reaktive Aluminate, das auf der Calciumsulfat-Hüttensand-Achse von 35 bis 70 Gew.-% Calciumsulfat, gerechnet als CaSO₄, und in Richtung reaktiver Aluminate, gerechnet als CA, von 0,5 bis 5 Gew.-% reicht, wobei die Mischung in dem Fenster des Dreistoffdiagrams derart abgestimmt ist, daß sich für ein Normmörtelprisma aus einer Mischung aus drei Gew.-Teilen Quarzsand und einem Gew.-Teil Bindemittel im Prüfalter von 28 Tagen, davon 21 Tage Lagerung bei 20°C und 65% relativer Luftfeuchtigkeit nach vorhergehender Feucht- bzw. Wasserlagerung, ein Schwinden kleiner 0.3 mm/m ergibt.

2. Bindemittel nach Anspruch 1, dadurch gekennzeichnet, daß die Rezeptur in dem Fenster des Dreistoffdiagramms derart abgestimmt ist, daß sich ein Quellen bei 26-tätiger Wasserlagerung bei vorheriger zweitägiger Feuchtlagerung von höchstens 1 mm/m ergibt.

3. Bindemittel nach Anspruch 1 oder 2, dadurch gekennzeichnet, daß als Calciumsulfat ein Gips mit einem Wasseranspruch < 0,4 eingesetzt ist.

4. Bindemittel nach Anspruch 3, dadurch gekennzeichnet, daß als Calciumsulfat Calciumsulfat-Alphahalbhydrat eingesetzt ist.

5. Bindemittel nach Anspruch 1 oder 2, dadurch gekennzeichnet, daß als Calciumsulfat ein REA-Gips eingesetzt ist.

6. Bindemittel nach einem der Ansprüche 1 bis 5, dadurch gekennzeichnet, daß die reaktiven Aluminate in einer Menge bis zu 2,5 Gew.-% eingesetzt sind.

7. Bindemittel nach einem der Ansprüche 1 bis 6, dadurch gekennzeichnet, daß die reaktiven Aluminate teilweise durch Kalkhydrat ersetzt sind.

8. Bindemittel nach Anspruch 7, dadurch gekennzeichnet, daß auf 2 Gew.-% Tonerdezement 1 Gew.-% Kalkhydrat kommen.

## Claims

1. A binder for hydraulically setting flowable floor screeds consisting of a mixture of calcium sulfate, granulated blast furnace slag and reactive aluminates the latter introduced by alumina cement and/or high alumina cement corresponding to a window in the ternary system calcium sulfate/granulated blast furnace slag/reactive aluminates extending on the axis calcium sulfate - granulated blast furnace slag from 35 to 70 % wt. calcium sulfate calculated as CaSO₄ and extending in the direction of the reactive aluminates from 0,5 to 5 % wt. calculated as CA, said mixture being balanced within the window of the ternary system in such manner that a standard mortar prism comprising a mixture of three parts weight quartz sand and one part weight binder at an testing age of 28 days after curing at 20°C and 65% relative humidity for 21 days preceded by curing in a humid atmosphere or in water exhibits a shrinkage of less than 0,3 mm/m.

2. A binder according to claim 1 wherein the formulation within the window of the ternary system is adjusted in such a manner that after 26 day curing in water preceded by two day curing in humid atmosphere a swelling of at most 1 mm/m is exhibited.

3. A binder according to claim 1 or 2 wherein for calcium sulfate gypsum with a water demand of < 0,4 is used.

4. A binder according to claim 3 wherein for calcium sulfate calcium sulfate alpha-hemihydrate is used.

5. A binder according to claim 1 or 2 wherein for calcium sulfate flue gas gypsum is used.

6. A binder according to any of the claims 1 to 5 wherein the reactive aluminates are used in an amount of at most 2,5 % wt.

7. A binder according to any of the claims 1 to 6 wherein the reactive aluminates are partially substituted by hydrated lime.

8. A binder according to claim 7 wherein 1 % wt. hydrated lime is used together with 2 % wt. alumina cement.

## Revendications

1. Un liant pour chapes à prise hydraulique composé de sulfate de calcium, de laitier de haut-fourneau granulé et d'aluminates reactifs les derniers étant introduits par du ciment alumineux et/ou du ciment alumineux fondu, correspondant à une fenêtre dans le système ternaire sulfate de calcium / laitier de haut-fourneau granulé / aluminates reactifs, qui s'étend sur l'axe sulfate de calcium - laitier de haut-forneau granulé de 35 à 70 % en poids de sulfate de calcium calculé comme CaSO₄ et en direction des aluminates reactifs de 0,5 à 5 % en poids calculé comme CA, le mélange dans la fenêtre du système ternaire étant réglé de telle facon qu'un prisme de mortier normalisé fait d'un mélange de trois parties en poids de sable de quartz et d'une partie en poids de liant présente un retraît inférieur à 0,3 mm/m après 28 jours, dont 21 jours de stockage a 20°C à une humidité relative de 65% suivant un stockage humide ou dans l'eau.

2. Un liant selon la revendication 1, caractérisé par le fait que la formule dans la fenêtre du système ternaire est ajustée de telle facon qu'après 2 jours de stockage humide suivis de 26 jours de stockage dans l'eau le gonflement ne dépasse pas 1 mm/m.

3. Un liant selon l'une des revendications 1 ou 2, caractérisé par le fait qu'on utilise comme sulfate de calcium un gypse avec un pourcentage d'eau nécessaire au gâchage de < 0,4.

4. Un liant selon la revendication 3, caractérisé par le fait qu'on utilise comme sulfate de calcium du sulfate de calcium semi-hydraté type alpha.

5. Un liant selon l'une des revendications 1 ou 2, caractérisé par le fait qu'on utilise comme sulfate de calcium un gypse de désulfuration.

6. Un liant selon l'une des revendications 1 à 5, caractérisé par le fait qu'on utilise les aluminates reactifs dans une quantité au maximale de 2,5 % en poids.

7. Un liant selon l'une des revendications 1 à 6, caractérisé par le fait que les aluminates reactifs sont remplacés en partie par de la chaux hydratée.

8. Un liant selon la revendication 7, caractérisé par le fait qu'on utilise 2 % en poids de ciment alumineux avec 1 % en poids de chaux hydratée.
